# EUROPÄISCHE PATENTANMELDUNG

(11) **EP 0 639 717 A1**
(43) Veröffentlichungstag der Anmeldung: **22.02.1995**
(21) Anmeldenummer: 94111485.2
(22) Anmeldetag: 22.07.1994
(51) Int. Cl.: F15D 1/06, F16L 11/127

(54) **Pyroelektrisches Gefäss**

(30) Priorität: 23.07.1993 DE 4324860
(71) Anmelder: Holzapfel, Martin, D-81667 München (DE)
(72) Erfinder: Holzapfel, Wolfgang, Dr., D-83471 Schönau a.K. (DE)
(74) Vertreter: Schütz, Peter, Dipl.-Ing.

(57) **Zusammenfassung**

Gefäß für fluide oder fluidisierte Medien, dessen Gefäßwandung mindestens eine aktive Schicht (1) aus pyroelektrischem und/oder ferroelektrischem und/oder antiferroelektrischem und/oder magnetoelektrischem und/oder piezoelektrischem Material aufweist und Elektroden (2,3) zur Zuführung einer elektrischen Wechselspannung an die Schicht vorgesehen sind.

## Beschreibung

Rohre dienen dem Transport, flüssiger, gasförmiger sowie fester Stoffe oder deren Mischungen. Sie können aus Metallen, Kunststoffen oder Geweben bestehen, starr oder flexibel sein. Hergestellt werden sie durch Extrusion, Bördeln oder Schweißen gewickelter Bänder in Längs- oder Querrichtung oder in Schraubenform. Sie können gewebt oder gewirkt sein, sie können innen und/oder außen beschichtet sein, sie können mit Isolierungen versehen sein.

Aus der US-PS 4 215 384 ist es bekannt, bei einem elektrisch nicht leitfähigen Kunststoffrohr zur Ableitung statischer Aufladungen eines im Rohr transportierten fluiden Mediums innerhalb des Rohres einen längs verlaufenden elektrischen Leiter anzuordnen, der über Anschlüsse an Massepotential gelegt wird, so daß die beim Strömen des Mediums im Rohr entstehenden statischen Aufladungen nach Masse abgeleitet werden.

Beim Transport von Flüssigkeiten in Schläuchen oder Rohren treten hohe Reibungsverluste auf, sobald sich die laminare Strömung in turbulente Strömung wandelt. Der entstehende Druckverlust ist zudem von der Fließgeschwindigkeit und den rheologischen Eigenschaften des Fließmaterials abhängig. Es besteht daher der Wunsch, den Fließwiderstand in Rohren zu reduzieren, um die Drücke und Förderenergie zu reduzieren und gleichzeitig eine mögliche Abrasion der Innenflächen der Rohrleitungen zu vermindern.

Zur Erhöhung der Fließgeschwindigkeit werden in der Patentliteratur eine Reihe von Methoden vorgeschlagen, so zum Beispiel die Erwärmung einer dünnen Grenzschicht zwischen Fließmittel und Wandung, die als Gleitschicht dienen soll.

Zahlreiche Publikationen beschreiben die Verwendung von Zusätzen und Chemikalien zum Fließmittel und die erforderlichen mechanischen Einrichtungen einschließlich der Vorratsbehälter und der erforderlichen Pump- und Dosiereinrichtungen. Als Zusätze werden grenzflächenaktive Stoffe, z.B. Sulfonate, quartäre Ammoniumverbindungen, Silikone und andere Detergentien vorgeschlagen. Zusätze zu Schlämmen, die aus dem Fließmittel und/oder mit dem Fließmittel nicht mischbaren flüssigen und/oder festen Substanzen bestehen, z.B. Gummi- oder Kunststoffmehl, werden beschrieben. Weiter vorgeschlagene Zusätze sind Ethylencopolymerisate, Acrylderivate, hydrierte Polyisoprene oder spezielle Wachse. Für wäßrige Systeme werden Zusätze hochmolekularer Polyäthylenglykole im ppm-Bereich beschrieben; sie haben jedoch den Nachteil, ihre Wirksamkeit zu verlieren, sobald sie hohen Scherkräften ausgesetzt werden.

Es ist auch bekannt, daß die Zusätze bei der Weiterverarbeitung einen Störfaktor darstellen und aus diesem Grunde zum Teil unter großem Aufwand entfernt werden müssen.

Neben der Verbesserung der Fließeigenschaften der Transportstoffe ist die Verminderung der Reibung und der Abrasion in Rohren und Schläuchen wichtig für den Stofftransport. Materialfremde Zusätze wie Gummimehl oder Kunststoffe werden zu diesem Zweck eingesetzt.

In der chemischen Verfahrenstechnik werden Rohrleitungen temperiert, um die Fließstoffe einerseits leichter transportieren zu können und andererseits auf die erwünschte Verarbeitungstemperatur zu bringen. Chemische Reaktionen werden auf dem Transportweg in der Regel nicht durchgeführt, obwohl sich diese Möglichkeit bei Stoffmischungen durchaus anbietet.

Das Beispiel Erdölindustrie zeigt, daß wegen der großen Transportmengen auch geringe chemische Zusätze die Transportkosten stark erhöhen und aus diesem Grunde durch physikalische oder physikochemische Methoden ersetzt werden sollten. Aufgabe der Erfindung ist die Schaffung von Gefäßen, wie z.B. Rohren, welche die Verbesserung des Fließverhaltens des Transportmediums, die Änderung des rheologischen Verhaltens, die Reduzierung der Reibung an den Wandungen, die Verminderung der Abrasion an der Innenwand der Hohlleiter, die Koagulation flüssiger und/oder fester Stoffe, die Vermischung unterschiedlicher Aggregatzustände und die Initiierung und/oder Durchführung chemischer Reaktionen während des Transportes erlauben.

Diese Aufgabe wird durch die im Anspruch 1 angegebene Erfindung gelöst. Weiterbildungen sind in den Unteransprüchen gekennzeichnet.

Gemäß der Erfindung werden Gefäße, wie z.B. Schläuche oder Rohre, mit einer oder mehreren pyroelektrischen Schichten vollflächig oder partiell versehen, und an diese wird eine hochfrequente Spannung angelegt.

Geeignete pyroelektrische Stoffe sind sowohl als anorganische Salze wie auch als Kunststoffe verfügbar; sie müssen, um ihre Wirksamkeit zu erlangen, nach bekannten Verfahren polarisiert werden. Neuere Entwicklungen auf dem Kunststoffsektor führten zu PVDF-Copolymeren, die keine aufwendige Polarisierung mehr erfordern, allerdings ist der Wirkungsgrad dieser PVDF-Copolymere geringer als bei reinem PVDF.

Eine relativ einfache, piezoelektrische, flexible schlauchförmige Anordnung ist ein extrudierter PVDF- oder PVDF-Copolymer-Schlauch mit draht- oder netzförmigen eingebetteten Elektroden. Die Verwendung von Copolymeren hat den Vorteil, daß die Rohre nicht mehr polarisiert werden müssen und daher zu Schläuchen extrudiert werden können, die keiner weiteren elektrothermischen Behandlung mehr bedürfen.

Die Verwendung von PVDF und seiner Copolymerisate hat den weiteren Vorteil, daß diese Stufen antiadhäsiv sind und daher für den Transport höherviskoser und klebriger Stoffe verwendet werden können und ihre Reinigung keine Schwierigkeiten bereitet.

Ein starres Rohr kann erfindungsgemäß in der Weise aufgebaut sein, daß ein äußeres metallisches Schutzrohr mit einem keramischen piezoelektrischen Material beschichtet ist, in oder auf welchem die zweite Elektrode angebracht ist. Das starre Rohr kann als elektrischer Leiter dienen, und die zweite Elektrode kann in die keramische Masse eingebettet oder aufgelötet sein. Ein gewickeltes Rohr kann durch die Verschweißung von metallischen Verbundfolien erhalten werden, die mit pyroelektrischen Produkten beschichtet sind.

Die Kombination von polymeren ferroelektrischen Kunststoffen mit anorganischen keramisch-pyroelektrischen Produkten ist im Rahmen der Erfindung möglich und in vielen Anwendungsfällen erwünscht. Als pyroelektrische und/oder ferroelektrische Materialien können neben PVDF und deren Copolymeren auch anorganische, keramische Materialien, z.B. Bariumtitanat, dienen, die in der einschlägigen Literatur beschrieben werden. Kombinationen der ferroelektrischen Materialien untereinander sind ebenfalls möglich und können in vielen Fällen zu synergistischen Ergebnissen führen.

Die Verwendung piezoelektrischer Rohre und Schläuche ist unterhalb des Curie-Punktes ohne Schwierigkeiten möglich, eine Überschreitung ist wegen des Verlustes der piezoelektrischen Eigenschaften allerdings zu vermeiden. Zur Aktivierung der pyroelektrischen und piezoelektrischen Eigenschaften ist es erforderlich, die ferroelektrischen Rohre mit einem hochfrequenten Strom zu beaufschlagen. Dazu können Hochfrequenzgeneratoren üblicher Bauart verwendet werden, wobei Frequenz, Amplitude, Energiedichte usw. in weiten Grenzen und auf den Einsatzzweck bezogen varriert werden können. In den meisten Fällen ist es empfehlenswert, im Bereich der Resonanzschwingungen zu arbeiten. Es ist möglich, unterschiedliche Schwingungen gleichzeitig auf die Stoffe zu übertragen, die dieser Behandlung unterzogen werden sollen. Entsprechende Generatoren sind technisch beschrieben und im Handel erhältlich. Für spezielle Einsatzgebiete, z.B. der Pulverbehandlung, kann der Einsatz von überlagernden Frequenzen wirtschaftlich wichtig und technisch sinnvoll sein.

Weiterhin können erfindungsgemäß ausgebildete starre oder flexible Rohre außerdem mit Einrichtungen ausgerüstet sein, die eine zusätzliche physikalische Behandlung bewirken, z.B. Heiz- oder Kühleinrichtungen, Druckbeaufschlagung, Magnetfelder oder sonstige physikalische Größen.

Vorteile liegen beim Stofftransport in der ferroelektrischen und piezoelektrischen Behandlung, die ohne Zusatz von chemischen Hilfsmitteln oder anderer Stoffe zum Fließmaterial auskommt. Durch die piezoelektrische Beeinflussung des Fließmaterials werden die Reibungsverluste im Randbereich der Rohre vermindert. Beim Transport von Flüssigkeiten kann der Kern der Flüssigkeit auf der angeregten Zwischenschicht zwischen Kern und Rohrwandung gleiten und dadurch mit geringerem Kraftaufwand durch das Rohr transportiert werden. Die Einwirkung kann natürlich auch über den gesamten Querschnitt des Fließgutes erfolgen.

Die Aktivierung des Fließgutes macht es möglich, chemische Reaktionen zu initiieren und unter Umständen während des Transportes durchzuführen. Wirtschaftliche Vorteile liegen in der Verwendung elektrischer Energie ohne einen Zusatz chemischer Substanzen oder inerter Füllstoffe, die eine aufwendige Entfernung notwendig machen. Verwendung finden können piezoelektrische Rohre gemäß der Erfindung in der chemischen Verfahrenstechnik, beim Stofftransport flüssiger, fester oder gasförmiger Stoffe oder deren Mischungen.

Die Abscheidung staubförmiger Partikel, speziell feinster Stäube, wird durch die Behandlung im piezoelektrisch erregten Bereich erleichtert, wobei die erleichterte Agglomeration über längere Zeiträume erhalten bleibt, so daß eine Komprimierung in den üblichen Geräten auch noch zu einem späteren Zeitpunkt vorgenommen werden kann. Öle in Form von Naturerdöl oder schwerem Heizöl können leichter transportiert werden, wobei grobverteiltes Wasser feindispers im Öl, oder umgekehrt Öl in Wasser, dispergiert werden kann.

Die Erfindung kann überall dort eingesetzt werden, wo die rheologischen Eigenschaften eines Fließgutes über den gesamten Rohrquerschnitt oder nur im Bereich der Wandung verändert werden sollen. Durch Abbau der Thixotropie nur im Wandungsbereich wird bei niedrigem Energieaufwand die Fließgeschwindigkeit erhöht und die erforderliche Transportenergie reduziert. Sofern die Fließstoffe abrasive Stoffe enthalten, wird die Korrosion der Wandung vermindert.

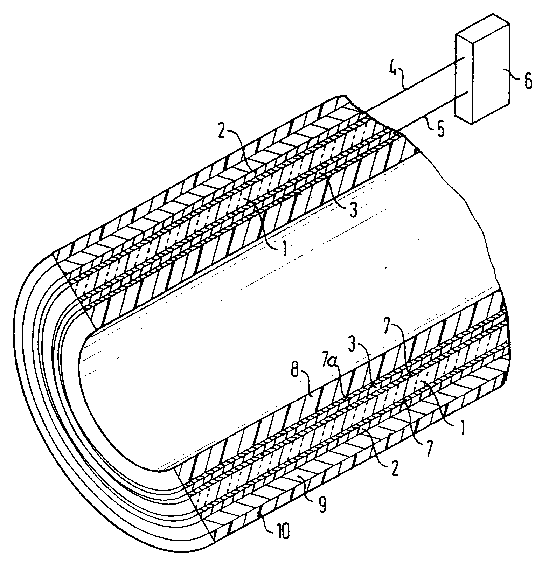

Die Erfindung sei nun anhand eines in der beiliegenden Figur veranschaulichten Ausführungsbeispiels eines pyroelektrischen Rohres, ohne jedoch auf dieses beschränkt zu sein, näher erläutert.

Das Rohr besteht aus einer pyroelektrischen Schicht 1 als aktive Schicht, die innen und außen mit je einer Elektrode 2 bzw. 3 versehen ist. Diesen Elektroden wird über Zuleitungen 4 bzw. 5 Wechselspannung von einem HF-Generator 6 zugeführt. Die Elektroden 2, 3 können in Form von Folien oder Rohren ausgebildet sein und die pyroelektrische Schicht 1 vollflächig bedecken. Man kann sie auch in Form von Drähten oder Drahtgeflecht vorsehen, wobei der Bedeckungsgrad ausreichend gewählt wird, um die gewünschte Anregung der pyroelektrischen Schicht 1 sicherzustellen. Auch sind Elektrodenausbildungen aus bekannten pyroelektrischen, organischen Polymeren und/oder organischen Salzen, wie z.B. keramischen Materialien, geeigneter Polarisation möglich, die innen und außen auf die pyroelektrische Schicht 1 aufgebracht werden. Besteht diese aktive pyroelektrische Schicht aus thermoplastischen Pyroelektrika, dann können die Elektroden auch in das Kunststoffmaterial eingebettet werden. Besteht die aktive Schicht 1 aus keramischem Material, so empfiehlt sich für die Elektrodenaufbringung eine Zwischenschicht 7 aus Lot oder leitendem Klebstoff.

Zur Isolierung gegen das durch das Rohr zu leitende fluide Medium ist das Rohr ggf. unter Zwischenschaltung einer Haftvermittlungsschicht 7a innen mit einer Schutzschicht 8 versehen, die beispielsweise aus Polyvinylidenfluorid bestehen kann und zweckmäßigerweise antiadhäsive Eigenschaften haben kann, um jegliche Gefahr eines Anhaftens des Mediums an der Rohrinnenwand zu vermeiden.

Die äußere Elektrode 2 ist im dargestellten Beispiel von einer Temperiereinrichtung 9 umgeben, die in geeigneter Weise ausgebildet wird, etwa als Heiz- oder Kühlschlange, so daß sich das Rohr heizen und/oder kühlen läßt. Schließlich ist außen eine Umhüllung 10 vorgesehen, welche zur elektrischen, mechanischen und/oder thermischen Isolierung dienen kann und zur Stabilität des Aufbaus beiträgt. Diese Umhüllung kann in Form glasfaserverstärkter Gewebe, Folien oder Rohre z.B. aus Kunststoff oder Metall ausgebildet sein.

Von dem soeben beschriebenen Schichtaufbau des Rohres müssen nicht notwendigerweise immer sämtliche Schichten vorgesehen sein, sondern je nach verwendeten Materialien und Anwendungszweck brauchen nur diejenigen Schichten vorgesehen zu werden, die im Einzelfall als erforderlich angesehen werden.

Die Erfindung ist vorstehend zwar am Beispiel eines Rohres bzw. Schlauches erläutert worden, jedoch ist dies in keiner Weise einschränkend zu verstehen. Vielmehr ist sie ebenso auf andere Gefäße anwendbar, in denen Materialien nicht transportiert, sondern chemisch oder physikalisch behandelt werden oder aufbewahrt werden.

## Patentansprüche

1. Gefäß für fluide oder fluidisierte Medien, **dadurch gekennzeichnet**, daß die Gefäßwandung mindestens eine aktive Schicht (1) aus pyroelektrischem und/oder ferroelektrischem und/oder antiferroelektrischem und/oder magnetoelektrischem und/oder piezoelektrischem Material aufweist und Elektroden (2, 3) zur Zuführung einer elektrischen Wechselspannung an die Schicht vorgesehen sind.

2. Gefäß nach Anspruch 1, **gekennzeichnet durch** eine Ausbildung als Rohr bzw. flexibler Schlauch.

3. Gefäß nach Anspruch 2, **dadurch gekennzeichnet**, daß das Rohr mit verstärkenden Bauelementen (Schicht 10) versehen ist.

4. Gefäß nach einem der Ansprüche 1 bis 3, **dadurch gekennzeichnet**, daß das pyroelektrische Schichtmaterial ein organisches pyroelektrisches Material, vorzugsweise Fluor-Polymere wie PVDF oder PVDF-Copolymere, ist.

5. Gefäß nach einem der Ansprüche 1 bis 3, **dadurch gekennzeichnet**, daß das pyroelektrische Schichtmaterial ein keramisches Material oder Halbleitermaterial ist.

6. Gefäß nach einem der Ansprüche 1 bis 5, **dadurch gekennzeichnet**, daß die Elektroden (2, 3) als metallische Leiter in Form leitfähiger Folien, Drähte oder Gewebe mit dem Wechselspannungsgenerator ausgebildet sind.

7. Gefäß nach einem der vorstehenden Ansprüche, **dadurch gekennzeichnet**, daß der Wechselspannungsgenerator (6) auf die Resonanzfrequenz des Gefäßes oder des vom Gefäß umschlossenen Mediums abgestimmt ist.

8. Gefäß nach einem der vorstehenden Ansprüche, **dadurch gekennzeichnet**, daß die aktive Schicht (1) von Schutzschichten (8, 10) umgeben ist.

9. Gefäß nach einem der vorstehenden Ansprüche, **gekennzeichnet durch** Zusatzeinrichtungen zur ergänzenden physikalischen Behandlung des fluiden Mediums, wie eine Temperiereinrichtung (9), Magnetfelderzeuger, Heiz- bzw. Kühleinrichtungen und Druckerzeuger.
